# EUROPEAN PATENT APPLICATION

(11) **EP 3 786 276 A1**
(43) Date of publication of application: **03.03.2021**
(21) Application number: 19792891.4
(22) Date of filing: 26.04.2019
(51) Int. Cl.: C12G 1/022, C12G 1/06, C12C 11/00

(54) **METHOD FOR TREATING ALCOHOLIC BEVERAGES DURING THE FERMENTATION PROCESS THEREOF**

(30) Priority: 27.04.2018 ES 201830420
(71) Applicant: Inbiolev, S.L., 31195 Aizoain (ES)
(72) Inventor: GARCÍA YOLDI, David, 31195 Aizoain (ES)
(86) International application number: PCT/ES2019/070284
(87) International publication number: WO 2019/207194

(57) **Abstract**

The invention consists of adding cyclodextrins, specifically beta-cyclodextrin, alpha-cyclodextrin and/or gamma-cyclodextrin, to trap fatty acids during the fermentation process of certain alcoholic beverages, either with a stabilising effect for the foams generated during said fermentation process, or as a detoxifier to increase the lifespan of the yeasts.

## Description

This invention refers to a method for treating alcoholic beverages during the fermentation process thereof, and more specifically, the addition of a substance responsible for trapping fatty acids during this fermentation process, which allows several advantages and applications depending on the type of alcoholic beverage in question and the exact moment of adding this substance, specifically cyclodextrins, and which are the following:
- To increase the lifespan of the yeasts, by trapping and blocking the fatty acids produced during the fermentation process, and which are harmful to these yeasts.
- To stabilise the foam in beers or other alcoholic beverages.

### BACKGROUND OF THE INVENTION

Cyclodextrins were discovered around 100 years ago. In the pharmaceutical industry, they have mainly been used to increase the water solubility, bio-availability or stability of various compounds for therapeutic use. Cyclodextrins are cyclic oligosaccharides, produced by selective enzymatic synthesis (cyclomaltodextrin glucanotransferase, CGTase). There are three cyclodextrins with a similar structure and they are made up of six, seven, or eight glucose monomers (in ring form). These are called alpha, beta or gamma cyclodextrin, respectively. The specific bond of the glucose monomers gives each cyclodextrin a rigid molecular structure with an "inner cavity" of a certain volume.

It is a very simple molecule as it contains different glucose molecules linked by α-1-4-glycosidic bonds that can be obtained naturally through the action of microbial enzymes.

The number of glucose units determines the name of each cyclodextrin, which is given by a Greek letter: α-CD (6 glucose units), β-CD (7 glucose units) γ-CD (8 glucose units), etc. Cyclodextrins are also subject to possible additions, substitutions or eliminations that lead to modifications in their structure.

This hydrophobic "internal cavity" is a fundamental structural characteristic of cyclodextrins, which gives them the ability to form complexes with other molecules of a very diverse nature. These molecules must be of a size compatible with the internal cavity of the cyclodextrin, thus allowing the formation of a stable "inclusion complex".

Physical and chemical properties of cyclodextrins:
- Solubility: This fundamental characteristic derives from the location of the free hydroxyl groups of each glucose unit.
- Thermal stability: Differential scanning calorimetry peaks show that cyclodextrins are very heat stable.

Cyclodextrins are chemically and physically very stable molecules with the ability to form complexes with a wide variety of organic compounds. As a result of this "inclusion" process of compounds within the molecule of cyclodextrins, it is possible to improve the properties of bio-availability, solubility in water, stability in the presence of light, heat, and oxidation conditions.

The peculiarity is that, structurally, cyclodextrins have a truncated conical ring shape with a highly apolar interior and a very hydrophilic exterior, which is where their great advantage lies.

This peculiar structure gives cyclodextrins the ability to encapsulate, through the formation of inclusion complexes, a wide variety of organic and inorganic molecules, commonly known as guest molecules, within their internal cavity.

The applicant is unaware of the application of these molecules in the scope of the practical application of the invention, with the aim of trapping and blocking the fatty acids produced during the fermentation of certain alcoholic beverages.

### DESCRIPTION OF THE INVENTION

The recommended procedure fills the technical gap described above, increasing the lifespan of yeasts by trapping and blocking the fatty acids produced during the fermentation process, and which are harmful to these yeasts, and also allowing the foam in beers or other alcoholic beverages to stabilise by also removing the fatty acids that form in the second fermentation of certain sparkling beverages, directly affecting the quality of the foam.

To do this, the invention works through the addition of cyclodextrins to the alcoholic beverage in question during its fermentation process.

More specifically, the cyclodextrins to be added to trap fatty acids during fermentation are beta-cyclodextrin, alpha-cyclodextrin and/or gamma-cyclodextrin.

The addition of these molecules can be carried out at different moments of the fermentation process, depending on the objectives pursued:
This process may be carried out at the beginning of the fermentation, with a detoxifying effect, with a dose in the order of 15-20 g/hl, depending on the density of the must. The lower the density of the must the higher the dose, given that the cells grow more at a lower the density.

This causes an exponential phase with a greater number of cells and more toxicity, so as the cells grow, the medium must be detoxified.

At densities of 1030-1010 g/l, alcoholic fermentations slow down due to the accumulation of ethanol and also the excretion, due to the secondary metabolism of the yeasts, of fatty acids that form pores in the cellular membranes, allowing the greater entry of toxicity and, with this, greater cell death. Thus, this is a critical moment in the fermentation where the sum of the generated alcoholic strength of around 8-10 degrees and the accumulated toxicity due to cell death of the entire process with the excretion of fatty acids during autolysis results in the need for the addition of 10-30 gr/hl, depending on the alcoholic strength and in direct proportion thereto. This addition of cyclodextrins causes a reduction of fatty acids so that the fermentation process is accelerated.

It is possible to add another dose of the same size later in lower densities between 1005-995 g/1, if the fermentation slows down, at a proportion of 10-20 g/hl. That would mean that even more toxicity needs to be removed.

In grape varieties such as merlot where the variety itself already contains a large quantity of short-chain fatty acids that damage yeast cell membranes, or in musts with a pH lower than 3.3 where the low pH further weakens the yeast cell membranes, it is always recommended to use a high dose regardless of the initial density or the subsequent potential strength.

The addition of cyclodextrins to base wines for the second fermentation of sparkling wines is also foreseen:
The addition of cyclodextrins at a dose between 1-5 g/hl in the second fermentation allows a better formation of the protein mesh and consequently better bubble stability and the non-formation of turbulent bubbles. This is once again due to the elimination of fatty acids that insert themselves between the meshes of the protein networks destabilising and causing larger pores, which causes the CO₂ not to be trapped or more retained by the protein mesh. If we retain more CO₂, the bubble is more stable as it rises up the glass, more homogeneous and less turbulent, that is, the sparkling wines have a higher organoleptic quality.

Finally, the invention also foresees the addition of cyclodextrins to stabilise foam in beer and improve the fermentation kinetics:
The moment of application is in conjunction with the addition of yeast to avoid opening the fermenter more than once. In addition to forming a better protein network and retaining CO₂ to create foam, this also allows the accumulation of fewer toxins in the fermentation and prevents the kinetics slowing down.

The doses are 10-20 g/hl depending on the total quantity of proteins in the malts, as well as personal taste regarding the greater consistency of the foam. It should be taken into account that the lower the quantity of protein, the higher the amount of cyclodextrins needed, as the formation of fatty acids would further weaken the limited protein network.

It is therefore the use of cyclodextrins, specifically beta-cyclodextrin, alpha-cyclodextrin and/or gamma-cyclodextrin to trap fatty acids during the fermentation of beer, that prevent the destabilising of the protein meshes of the beer which are what retain the carbon dioxide and allow the foam to be formed.

More specifically, during the fermentation that gives rise to beer, fatty acids are produced due to the metabolic stress of the yeasts involved in the fermentation process. These fatty acids, through weak physical-chemical linkages, interact with the proteins present, modifying their structures and their capacity to retain carbon dioxide. As a result of these interactions between the fatty acids and the proteins, the foam that forms is of a lower quality and has a shorter lifespan.

The use of cyclodextrins (mainly beta-cyclodextrin or gamma-cyclodextrin) due to their capacity to form inclusion complexes with lipophilic molecules (for example, fatty acids), and added during the fermentation process, allows the fatty acids produced during this process to be removed from the medium. In this way, the foam obtained has a longer lifespan and is of a higher quality.

This process is applicable or extendible to fermented products that form foam or bubbles.

It is also extendible to all cyclodextrins derived from alpha-, beta-, or gamma-cyclodextrin (methyl, dimethyl, hydroxypropyl, amino derivatives, etc.).

### DESCRIPTION OF THE DRAWINGS

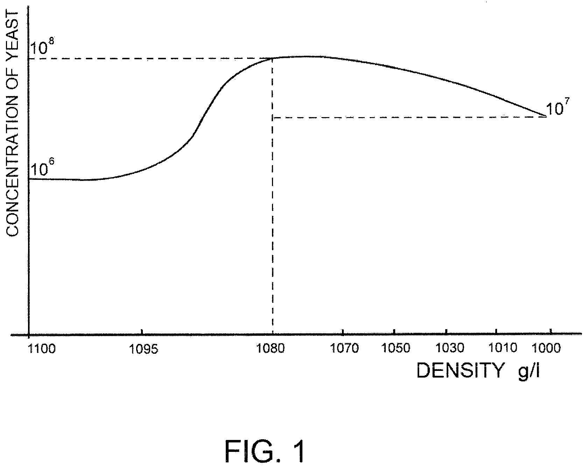

In order to complement the description given below and to allow for a better understanding of the characteristics of the invention, according to a preferred example of the practical implementation thereof, a diagram (Figure 1) is attached as an integral part of this description. This shows how the yeast concentration varies depending on the density during the fermentation process of a wine, treated with the procedure of the invention. Here one can observe how an exponential phase is achieved with a greater number of cells and greater toxicity at the beginning of the fermentation.

### EXAMPLE OF PRACTICAL IMPLEMENTATION

The applicant has conducted a study with more than 2000 wines during 3 years of study with both white and red varieties from all over Spain.

They have also successfully conducted studies on different beers in the fermentation kinetics.

The following conclusions have been derived from these studies:
- The cyclodextrins in white and red wines improve the fermentation kinetics and lead to greater fermentation security.
- The cyclodextrins in white and red wines improve the aroma because the yeasts work without metabolic stress as the medium is less toxic, leading to greater vitality and consequently a greater consumption of amino acids, and therefore a better aromatic profile, which results in clean and clear aromas.
- The cyclodextrins in beer cause fermentations to be of very stable and secure kinetics, allowing the yeast to work better and with less stress and cell death.
- The cyclodextrins in beer improve the aroma due to the fact that the reduced toxicity of the medium increases the vitality of the yeasts and consequently their amino acid consumption. As a result of this, more intense and cleaner aromas are obtained.
- Cyclodextrins lead to the stability of the bubbles in sparkling wines and the non-turbulence of the bubbles by stabilising the protein meshes through the absorption of fatty acids from the fermentation medium.
- Cyclodextrins result in the stability of the foam in beer by stabilising the protein meshes through the absorption of fatty acids from the fermentation medium.

## Claims

1. Method for treating alcoholic beverages during the fermentation process thereof, **characterised by** consisting of the addition of cyclodextrins to the alcoholic beverage in question, during its fermentation process, as an agent responsible for trapping and blocking the fatty acids formed in this fermentation process.

2. Method for treating alcoholic beverages during the fermentation process thereof, according to claim 1, **characterised by** the cyclodextrins to be added being beta-cyclodextrin, alpha-cyclodextrin and/or gamma-cyclodextrin, as well as cyclodextrins derived from them.

3. Method for treating alcoholic beverages during the fermentation process thereof, according to claim 1, **characterised by** the fact that when the process is intended for the treatment of red, white or rose wines, the cyclodextrins are added in the initial fermentation at a proportion of 15-20 g/hl.

4. Method for treating alcoholic beverages during the fermentation process thereof, according to claim 1, **characterised by** the fact that when the process is intended for the treatment of red, white or rose wines, the cyclodextrins are added at a proportion of 10-20 g/hl when the density of this wine ranges between 1030 and 1010 g/l.

5. Method for treating alcoholic beverages during the fermentation process thereof, according to claims 1 to 4, **characterised by** the fact that an additional phase of adding cyclodextrins is established when the density of this wine is between 1005 and 995 g/l, in the event that the fermentation process slows down, at a proportion of 10-20 g/hl.

6. Method for treating alcoholic beverages during the fermentation process thereof, according to claim 1, **characterised by** the fact that when the process is intended to obtain beers, the cyclodextrins are added simultaneously to the process of adding the yeasts and at a proportion of 10-20 g/hl.

7. Method for treating alcoholic beverages during the fermentation process thereof, according to claim 1, **characterised by** the fact that when the process is intended to obtain sparkling wines, the cyclodextrins are added to the base wine, that is, at the start of the second fermentation, at a proportion of 1-5 g/hl.
